# EUROPEAN PATENT APPLICATION

(11) **EP 2 270 728 A1**
(43) Date of publication of application: **05.01.2011**
(21) Application number: 09305622.4
(22) Date of filing: 30.06.2009
(51) Int. Cl.: G06Q 10/00, G06F 9/455

(54) **A method of managing resources, corresponding computer program product, and data storage device therefor**

(71) Applicant: Alcatel Lucent, 75008 Paris (FR)
(72) Inventor: Kessler, Markus, 73728, Esslingen am Neckar (DE)
(74) Representative: Brose, Gerhard

(57) **Abstract**

The invention concerns a method of managing resources, the method comprising the steps of receiving (101) from a user a request for a service based on a resource, provisioning (102) the resource, and delivering (105) the service to the user, wherein the resource is a virtual resource and the method further comprises the steps of mapping (103) the virtual resource to a physical resource and instantiating (104) a process on the physical resource, and the service is delivered (105) by the process. The invention further concerns a computer program product and a device therefor.

## Description

The invention relates to a method of managing resources according to claim 1, a computer program product according to claim 9, and a data storage device according to claim 10.

Software as a Service (SaaS) is a model of software deployment whereby a provider licenses an application to customers for use as a service on demand. SaaS software vendors may host the application on their own web servers or download the application to the consumer device, disabling it after use or after the on-demand contract expires. The on-demand function may be handled internally to share licenses within a firm or by a third-party application service provider (ASP) sharing licenses between firms.

The current generation of SaaS architectures provides scalability through a multitier architecture supporting a load-balanced farm of application instances, running on a variable number of servers. Here, by load balancing is meant any technique to spread work between two or more computers, network links, central processing units (CPUs), hard drives, or other resources, in order to obtain optimal resource utilization, maximize throughput, and minimize response time. Using multiple components with load balancing, instead of a single component, may increase reliability through redundancy. The provider can increase or decrease the system's capacity to match demand by adding or removing servers, without the need for any further alteration of application software architecture.

The article "Service-Based Software: The Future for Flexible Software", published in "Proceedings: Seventh Asia-Pacific Software Engineering Conference" (APSEC 2000), describes a known approach to providing software as a service.

A major downside of this conventional approach is its inability to commit to a predetermined measure of service reliability, that is, to guarantee availability of the requested service under stated conditions during a specified time interval.

It is thus an object of the invention to present an approach to resource allocation that overcomes the aforementioned deficiencies and provides a calculable probability of resource availability for any given timeslot.

This object is achieved by a method according to claim 1, a computer program product according to claim 9, or a data storage device according to claim 10.

A main idea of the invention is to introduce an additional abstraction layer composed of so-called virtual resources, along with an optimized scheme of mapping these virtual resources to physical resources to bind the processes to be executed to actual processing hardware. Here, by resource, also called computational resource in the field of utility computing, is meant any component of limited availability within a computer system. Examples of resources include the devices connected to the computer system such as hard disks, the internal components of the computer system such as its CPU or random access memory (RAM), as well as specific files, network connections, and memory areas.

Further developments of the invention can be gathered from the dependent claims and the following description.

In the following the invention will be explained further making reference to the attached drawing.

To manage resources according to an embodiment of the invention, a request for a service based on a virtual resource is received from a user. Upon provisioning the virtual resource, the virtual resource is mapped to a physical resource, on which a process is then instantiated. Finally, the process delivers the service to the user.

In this context, by virtual resource is meant a software equivalent of a physical resource that acts and appears to the user like the physical resource that it represents. Virtual memory, virtual storage, virtual input/output (I/O), and virtual memory are some examples of resource virtualization.

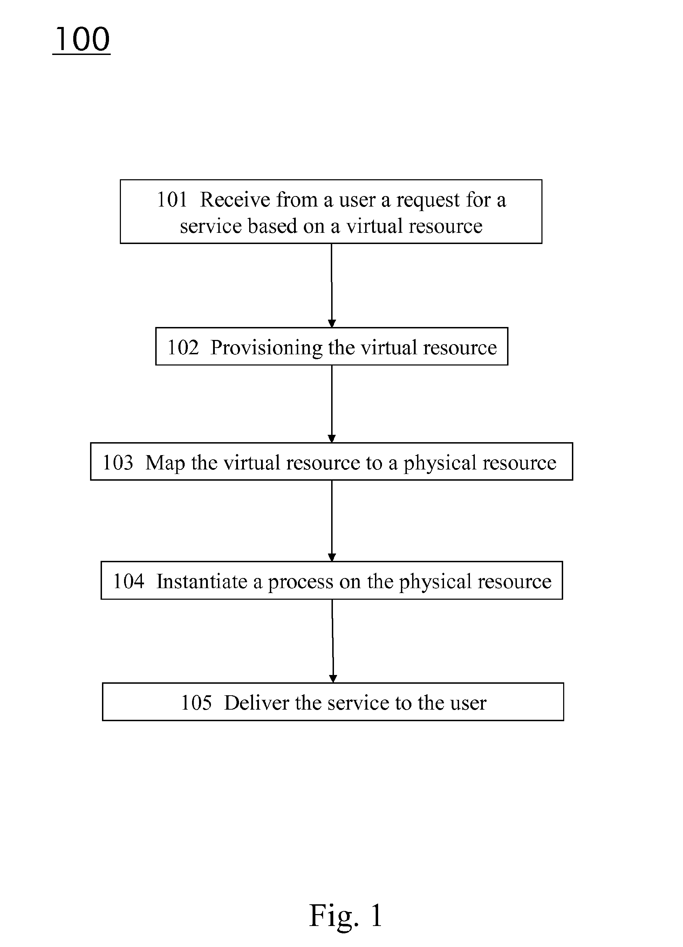

Fig. 1 shows a flowchart depicting a method according to an embodiment of the invention.

In the following, a method according to the invention is elucidated by way of example, referencing Fig. 1.

The flowchart 100 of Fig. 1 comprises a first step 101, a second step 102, a third step 103, a forth step 104, and a fifth step 105 mutually connected by arrows indicating a preferred order of execution.

In the embodiment at hand, the method is performed by a software program run by an ASP, that is, a business that provides computer-based services to customers over a network. The ASP may take the form of, inter alia, a specialist or functional ASP delivering a single application, such as credit card payment processing or timesheet services; a vertical market ASP delivering a solution package for a specific customer type, such as a dental practice; an enterprise ASP delivering broad spectrum solutions; or a local ASP delivering small business services within a limited area. In an alternative embodiment, the method may be performed by a software program run by a large multi-line company using ASP concepts as a particular business model to support specific customers.

For the sake of simplicity, it is assumed that the ASP fully owns, operates and maintains the physical resources required to provide these services. To address a wide variety of geographically dispersed customers, the latter connect to the ASP via the Internet or a thin client, sometimes called a lean or slim client. Here, by a thin client is meant a client computer or client software in a client-server architecture network which depends primarily on the ASP for processing activities, and mainly focuses on conveying input and output between the user and the remote service. To eliminate software integration issues from the client side, access is established by means of the Hypertext Markup Language (HTML), allowing the use of a conventional web browser by the customer, or special-purpose application programming interfaces (APIs) based, for example, on Extensible Markup Language (XML).

In the first step 101, the ASP receives from a user a request for a service based on a virtual resource. To enable the user to connect to the ASP through the World Wide Web (WWW), the request takes the form of a Hypertext Transfer Protocol (HTTP) request message, comprising a request line, headers, and an optional message body. To this end, the ASP provides a website, that is, a collection of related web pages that are addressed with a common domain name, incorporating control elements such as buttons to facilitate the creation of requests. To further encrypt the HTTP message prior to transmission and decrypt the message upon arrival, the user and ASP employ the Hypertext Transfer Protocol Secure (HTTPS), a combination of HTTP and a cryptographic protocol.

To enable the user to flexibly schedule his or her resource demands, the request comprises an indication of a time interval. An example where this may be required would be the transmission of a regular television show via Internet Protocol Television (IPTV), that is, a digital television service delivered using the Internet Protocol (IP) over a broadband connection. In this case, the indicated time interval would correspond to the timeslot when the show is to be broadcast.

To allow the user to impose specific requirements on the resource to be allocated, the request comprises an indication of such requirements. An example of a requirement that a user may indicate would be a specific execution environment such as the Java Runtime Environment (JRE), that is, a Java Virtual Machine (JVM) bundled together with a set of standard class libraries that implement the Java Application Programming Interface (API). Another example would be a specific operating system for operating the resource to be allocated.

Finally, for critical processing tasks, the request further comprises an indication of a level of redundancy.

In the second step 102, the ASP provisions the required virtual resource. In a preliminary step (not depicted), this includes selecting the virtual resource from a plurality of virtual resources according to the requirement indicated in the request. If the request indicated a demand for redundancy, multiple virtual resources are provisioned according to the level of redundancy specified in the request.

In the third step 103, the ASP maps the virtual resource provisioned in the second step 102 to a physical resource. If multiple virtual resources have been provisioned, each of these virtual resources is mapped to a different physical resource to achieve the envisaged redundancy. Moreover, to achieve a consolidation of resources, multiple virtual resources may be mapped to a single physical resource if its capacity allows.

In the case of a failure of the physical resource of the third step 103, the ASP re-maps the virtual resource to a further physical resource to ensure that, at the time of execution, the virtual resource is associated with a fully functional physical resource. To be able to respond to such failures with adequate flexibility, the ASP hosts a pool of physical resources whose number exceeds the number of virtual resources that may be provisioned. The exact pool size is chosen in due proportion to achieve a predetermined service quality desired by the user or ASP.

In the forth step 104, the ASP instantiates a process on the physical resource of the third step 103. Generally, but not necessarily, this is achieved by executing the process on a CPU associated with that physical resource. In this case, any specific operating system indicated in the request acts as a host for the executed process, and the process may make use of operating system services through application programming interfaces (APIs) or system calls. If the operating system requested supports multitasking, further independent processes associated with different requests may be executed in parallel, giving the appearance that several tasks are performed at the same time. To this end, the operating system may assign a certain share of CPU time to each process, a technique commonly known as time sharing. If a process requires additional physical resources, it may trigger an interrupt, that is, an asynchronous signal indicating the need for the operating system's attention. For the case where remote resources are needed to perform certain functions of the process, the operating system supports a variety of networking protocols to access such resources over a computer network.

If the request indicated a demand for redundancy and a plurality of virtual resources has thus been provisioned, the ASP instantiates the process, for each virtual resource provisioned, on the physical resource to which that virtual resource has been mapped in the third step 103. Hence, the process is effectively replicated with the intention of increasing reliability of the system. In engineering, this technique is referred to as fault-tolerant design, also known as fail-safe design, meaning a design that enables a system to continue operation, possibly at a reduced level, rather than failing completely, when some part of the system fails. In this context, the term is used to describe a computer-based system designed to continue more or less fully operational with, perhaps, a reduction in throughput or an increase in response time in the event of some partial failure. That is, the system as a whole is not stopped due to problems either in any one physical resource or any one instantiated process. In computer science, the execution of replicas on separate physical resources is called a replication in space.

If the request comprised an indication of other specific requirements such as the availability of a JRE, the forth step 104 may encompass the instantiation of a JVM. In this example, instead of executing the process directly on the CPU, the ASP would use the JVM to execute a form of computer intermediate language commonly referred to as Java bytecode which is normally, but not necessarily, generated from Java source code.

In the fifth step 105, the process of the forth step 104 delivers the requested service to the user during the time interval specified in the first step 101. If the request indicated a demand for redundancy, the service is delivered by one or more of the replicated processes instantiated in the forth step 104, uniformly with delivery of the service by a single, non-replicated process. Replication is thus transparent to the user to whom the service is delivered. An approach where the service is delivered simultaneously by every replica is commonly referred to as active replication.

To mitigate the risk of hardware failures, the ASP supports failover, that is, the capability to switch over automatically to a redundant process upon the failure or abnormal termination of any one process. In an alternative embodiment, failover is intentionally not entirely automatic, requiring human intervention. This approach is commonly called "automated with manual approval", as the activity is automatic once approval is given. Either with or without manual approval, a failover of replicas is typically hidden from the user.

An additional benefit of providing failover capabilities is the continuous availability of the service to be delivered. If the physical resources are entire computer systems, they effectively form what is known in the art as a high-availability cluster (HA cluster). HA clusters are often used for critical databases, file sharing, business applications, and customer services such as electronic commerce websites. If the service is delivered simultaneously by multiple processes instantiated on different computers (called nodes in the context of HA clustering), the configuration is commonly characterized as "active/active". In this case, traffic intended for a failed node is either passed on to an existing node or load balanced across the remaining nodes. This usually, but no necessarily, requires a homogeneous software configuration across all nodes.

To formally define the level of service expected by the user, the service delivered is bound to a service level agreement (SLA), that is, a negotiated agreement between the ASP and the user or customer. The SLA may specify, inter alia, the levels of availability, serviceability, performance, operation, or other attributes of the service such as billing.

In a final step (not depicted), the ASP may purge the physical resource of the third step 103. If the forth step 104 encompassed the instantiation of a virtual machine such as a JVM, this purge may include a garbage collection of the virtual machine, that is, the detection and pruning of unused or inaccessible data structures before the resource is ultimately freed up.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of managing resources, the method comprising the steps of
receiving (101) from a user a request for a service based on a resource,
provisioning (102) the resource, and
delivering (105) the service to the user, **characterized in that** the resource is a virtual resource and the method further comprises the steps of
mapping (103) the virtual resource to a physical resource and
instantiating (104) a process on the physical resource, wherein the service is delivered (105) by the process.

2. A method according to claim 1, **characterized in that** the request comprises an indication of a time interval and the service is delivered (105) during the time interval.

3. A method according to claim 1, **characterized in that** the request comprises an indication of a requirement on the resource and the method comprises the step of selecting the resource from a plurality of resources based on the requirement.

4. A method according to claim 1, **characterized in that** the request comprises an indication of a level of redundancy and the method comprises provisioning (102) a plurality of virtual resources based on the level of redundancy, wherein each virtual resource is mapped (103) to a different physical resource.

5. A method according to claim 1, **characterized in that** the method comprises re-mapping the virtual resource to a further physical resource in response to a failure of the physical resource.

6. A method according to claim 1, **characterized in that** the virtual resource is comprised in a plurality of virtual resources and the physical resource is comprised in a plurality of physical resources, wherein the number of physical resources is chosen in due proportion to the number of virtual resources to achieve a predetermined service quality.

7. A method according to claim 6, **characterized in that** multiple virtual resources are mapped (103) to the same physical resource.

8. A method according to claim 1, **characterized in that** the step of instantiating (104) the process on the physical resource comprises executing the process by a central processing unit of the physical resource.

9. A computer program product comprising computer-executable instructions for performing a method when the program is run on a computer, the method comprising the steps of
receiving (101) from a user a request for a service based on a resource,
provisioning (102) the resource, and
delivering (105) the service to the user, **characterized in that** the resource is a virtual resource and the method further comprises the steps of
mapping (103) the virtual resource to a physical resource and
instantiating (104) a process on the physical resource, wherein the service is delivered (105) by the process.

10. A device programmed or configured to perform a method comprising the steps of
receiving (101) from a user a request for a service based on a resource,
provisioning (102) the resource, and
delivering (105) the service to the user, **characterized in that** the resource is a virtual resource and the method further comprises the steps of
mapping (103) the virtual resource to a physical resource and
instantiating (104) a process on the physical resource, wherein the service is delivered (105) by the process.
